# EUROPEAN PATENT APPLICATION

(11) **EP 3 355 492 A1**
(43) Date of publication of application: **01.08.2018**
(21) Application number: 17305096.4
(22) Date of filing: 30.01.2017
(51) Int. Cl.: H04B 17/309, H04N 5/44, H04N 21/438, H04N 21/61, H04N 5/50, H01Q 21/00, H04N 21/426

(54) **METHOD AND APPARATUS FOR OPERATING A DIGITAL SIGNAL RECEIVER**

(71) Applicant: Thomson Licensing, 92130 Issy-les-Moulineaux (FR)
(72) Inventor: LOUZIR, Ali, 35576 Cesson-Sévigné Cedex (FR); LE NAOUR, Jean-Yves, 35576 Cesson-Sévigné Cedex (FR)
(74) Representative: Huchet, Anne

(57) **Abstract**

A method for operating a digital signal receiver is disclosed. A salient idea of the present principles is to use a smart antenna system embedded in a digital signal receiver, the smart antenna system being operable in an omnidirectional mode and in a plurality of directional modes, the smart antenna system being further associated with a two steps installation method of the digital signal receiver. The first step of the installation method comprises determining an indoor location for positioning the digital signal receiver based on measuring the signal strength of the available RF channels received through an omnidirectional radiation pattern of the smart antenna system. The second step of the installation method comprises configuring the smart antenna system, located at the determined location by the selection of a directional mode for each channel, based on a signal quality such as a signal to noise ratio, a bit error rate or any combination thereof. The smart antenna system can also be advantageously leveraged by a further optional step of dynamic optimization of the signal quality in order to take into account dynamic changes of the propagation conditions.

## Description

### 1. TECHNICAL FIELD

The technical field of the disclosed method, system and apparatus is related to the indoor reception of digital television signals.

### 2. BACKGROUND ART

Digital Terrestrial Television (DTT) distribution is popular all around the world. Traditionally DTT receivers use an outdoor antenna located on the roof of buildings for ensuring a good reception quality. Using small size indoor antenna rather than roof-top antenna would improve the user experience by simplifying the product, reducing the wiring and making the installation easier in the building. However using small size indoor antennas for receiving DTT signals raises at least three challenges. First, receiving DTT signals using a small size antenna for example integrated to the product, in comparison with using roof top antenna gives rise to a drastic signal attenuation. Signal losses result from the antenna height loss due to the reflection from ground and the clearance of the Fresnel zone, the building penetration loss and the antenna gain loss due to the limited size of the indoor/integrated antenna. The total extra-loss may vary from typically 20 dB up to 40 dB or more depending on the height, the type of building and the orientation regarding the broadcast tower. Second the exposure of the receiver to interferences from different broadcast towers is increased due to the use of small size antenna. Third, the multipath issue is accentuated in an indoor context. Since there is often no direct line-of-sight signal path from the transmitter, indoor reception is further deteriorated by a large amount of multipath as the signal reflects on surrounding objects such as walls, ceilings and nearby buildings, and by dynamic multipath caused by moving objects such as vehicles and human bodies. Furthermore, the frequency selective multipath fading worsen the signal strength and interferences issues. It is generally not easy for a user to find the best place for the localization of the product/antenna within the home, in particular when taking into account the above issues. A method for automatic antenna/product installation within the home is therefore needed.

### 3. SUMMARY

A salient idea of the present principles is to use a smart antenna system embedded in a digital signal receiver, the smart antenna system being operable in an omnidirectional mode and in a plurality of directional modes, the smart antenna system being further associated with a two steps installation method of the digital signal receiver. The first step of the installation method comprises determining an indoor location for positioning the digital signal receiver based on measuring the Received Signal Strength (RSS) of the available RF channels received through an omnidirectional radiation pattern of the smart antenna system. The second step of the installation method comprises configuring the smart antenna system, located at the determined location by the selection of a directional mode for each channel, based on a signal quality such as a signal to noise ratio, a bit error rate or any combination thereof. The smart antenna system can also be advantageously leveraged by a further optional step of dynamic optimization of the signal quality in order to take into account dynamic changes of the propagation conditions.

To that end a digital signal receiver device comprising an antenna operable in an omnidirectional mode and in a plurality of directional modes is disclosed. The digital signal receiver comprises a processor configured to:
- set the antenna in the omnidirectional mode for measuring a first RSS (Received Signal Strength) for a set of channels at various locations;
- determine a location responsive to the first RSS measured at the location for the set of channels;
- set the antenna in a directional mode selected for each channel based on a first signal quality measured for each channel of the set of channels at the determined location.

According to a particularly advantageous variant, the processor is further configured to measure the first signal quality of each channel for each directional mode of the antenna.

According to another particularly advantageous variant, the digital signal receiver further comprises a first RF receiver connected to the antenna via a selector, the selector being adapted to configure the antenna in a first mode associated with the first RF receiver, the first mode being among the omnidirectional mode and the plurality of directional modes.

According to another particularly advantageous variant, the digital signal receiver further comprises a second RF receiver connected to the antenna via the selector, the selector being further adapted to configure the antenna in a second mode associated with the second RF receiver, in parallel of the first mode associated with the first RF receiver, the second mode being among the omnidirectional mode and the plurality of directional modes.

According to another particularly advantageous variant, the first RSS is measured for a first channel by the first receiver in parallel of a second RSS being measured by the second receiver for a second channel.

According to another particularly advantageous variant, the first signal quality is measured for a first channel by the first receiver in parallel of a second signal quality being measured by the second receiver for a second channel.

According to another particularly advantageous variant, the first RF receiver is configured to receive a TV program from the antenna, being configured in a first directional mode corresponding to a channel of the TV program, the second RF receiver being configured to sequentially configure the antenna in other directional modes and to measure the second signal quality of the channel of the TV program for each other directional mode.

According to a particularly advantageous variant, the processor is further configured to set the antenna in a second directional mode in case the second signal quality measured by the second RF receiver as the second directional mode is set, is of higher quality than the first signal quality.

According to another particularly advantageous variant, the first and the second signal quality comprise a signal to noise ratio value.

According to another particularly advantageous variant, the first and the second signal quality comprise a bit error rate value.

According to another particularly advantageous variant, the set of channels corresponds to a subset of available channels, and is configurable by a user.

In a second aspect an antenna adapted to a digital signal reception is also disclosed. The antenna is operable in an omnidirectional mode and in a plurality of directional modes, the omnidirectional mode being used for measuring a received signal strength for a set of channels at various locations so as to determine a location, a directional mode of the antenna being determined for each channel of the set of channels based on measuring a signal quality of each channel at the determined location.

In a third aspect a method for operating a digital signal receiver is also disclosed. The digital signal receiver comprises an antenna operable in an omnidirectional mode and in a plurality of directional modes. The method comprises:
- measuring a first RSS (Received Signal Strength) for a set of channels at various locations;
- determining a location responsive to the first RSS measured at the location for the set of channels;
- determining a directional mode of the antenna at the determined location based on measuring a signal quality of each channel of the set of channels.

According to a particularly advantageous variant, the method further comprises:
- receiving a TV program from the antenna, being set in a first directional mode corresponding to a channel of the TV program,
- sequentially setting the antenna in other directional modes and measuring a second signal quality of the channel for each other directional mode.

In a fourth aspect, a computer program for operating a digital signal receiver comprising an antenna operable in an omnidirectional mode and in a plurality of directional modes is also disclosed. The computer program comprises program code instructions executable by at least one processor for:
- setting the antenna in the omnidirectional mode for measuring a first RSS (Received Signal Strength) for a set of channels at various locations;
- determining a location responsive to the first RSS measured at the location for the set of channels;
- setting the antenna in a directional mode selected for each channel based on a first signal quality measured for each channel of the set of channels at the determined location.

In a fifth aspect, the disclosed principles are directed to a computer program product comprising instructions of program code for execution by at least one processor to perform the disclosed method.

In a sixth aspect, a non-transitory computer-readable storage medium storing computer-executable program code instructions to operate a digital signal receiver comprising an antenna operable in an omnidirectional mode and in a plurality of directional modes is also disclosed. The program code instructions are executable by at least one processor for:
- setting the antenna in the omnidirectional mode for measuring a first RSS (Received Signal Strength) for a set of channels at various locations;
- determining a location responsive to the first RSS measured at the location for the set of channels;
- setting the antenna in a directional mode selected for each channel based on a first signal quality measured for each channel of the set of channels at the determined location.

While not explicitly described, the present embodiments may be employed in any combination or sub-combination. For example, the present principles are not limited to the described variants, and any arrangement of variants and embodiments of a smart antenna system can be used. Moreover the present principles are not limited to the described omnidirectional and directional beam examples. The present principles are not further limited to the described receivers comprising an integrated antenna and are applicable to any other receivers connected to an external indoor antenna.

Besides, any characteristic, variant or embodiment described for the digital signal receiver device is compatible with the antenna, the smart antenna system and the method for operating the digital signal receiver device.

### 4. BRIEF DESCRIPTION OF THE DRAWINGS

- **Figure 1** describes a method for operating a digital signal receiver comprising an antenna operable in an omnidirectional mode and in a plurality of directional modes, according to a specific and non-limiting embodiment of the disclosed principles;
- **Figure 2** details a step of the method of Figure 1, according to a specific and non-limiting embodiment of the disclosed principles;
- **Figure 3** describes a processing device comprising an antenna operable in an omnidirectional mode and in a plurality of directional modes, according to a specific and non-limiting embodiment of the disclosed principles;
- **Figure 4a** describes an antenna operable in an omnidirectional mode and in a plurality of directional modes, according to a specific and non-limiting embodiment of the disclosed principles;
- **Figure 4b** represents an exemplary architecture of the processing device of figure 1 according to a specific and non-limiting embodiment of the present principles.

### 5. DESCRIPTION OF EMBODIMENTS

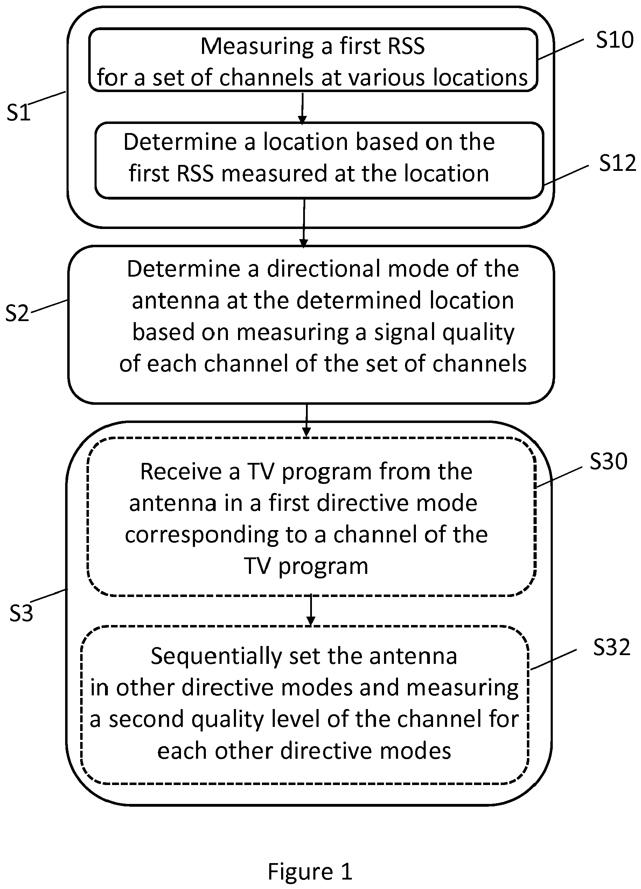

**Figure 1** describes a method for operating a digital signal receiver comprising an antenna operable in an omnidirectional mode and in a plurality of directional modes, according to a specific and non-limiting embodiment of the disclosed principles. The digital signal receiver is for example a Digital Terrestrial Television receiver, but any kind of receiver adapted to receive wireless digital signals from a set of radio frequency channels is compatible with the disclosed principles. The term channel is used throughout the description aiming at designating a Radio Frequency (RF) channel. Digital Terrestrial Television is for example compliant with the American ATSC (Advanced Television Systems Committee) standard in any of its version, particularly the ATSC 3.0 version based on the OFDM (Orthogonal Frequency Division Multiplexing) technology. In another example, Digital Terrestrial Television is compliant with the DVB-T (Digital Video Broadcast - Terrestrial) standard in any of its version.

According to a specific and non-limiting embodiment of the disclosed principles, the antenna is integrated in the digital signal receiver, for example as a part of the main printed circuit board of the digital signal receiver and does not need to be positioned independently from the digital signal receiver. According to this specific and non-limiting embodiment, the digital signal receiver further comprises a network interface for connection to a home network such as for example and without limitation an Ethernet, WiFi, or Powerline network. The network interface is for example configured to transmit over the home network a received television program to another device connected to the home network. There may be a large set of potential locations in a home for such kind of network devices, as they do not need to be located closed to a display device. For example such digital signal receivers may be advantageously located in the attic of the home, being remotely configured from the network interface and benefiting of some more height (because being closer to the roof, but remaining protected from bad weather conditions). As mentioned above, DTT indoor reception, being sensitive to multipath, is highly depending on a location of the antenna. Identifying an indoor location with a good reception is of primary importance. Given the important number of potential locations and channels to test, the time response and the overall search time must be minimized and an adequate interface should be provided to the user, to facilitate his installation. Furthermore, for a given geographic location, there are generally several broadcast towers located in different directions and it not practical for the user to orientate the antenna/product at multiple directions. And even if this would have been feasible (using an adequate tool), it is not granted at all to find an orientation that allows the best reception for all the desired channels.

A salient idea is to associate a smart antenna system to a multi-step method comprising a first S1 and a second S2 step of installation of the digital signal receiver, wherein the smart antenna system is operable in an omnidirectional mode and in a plurality of directional modes. The smart antenna system is further configurable to operate several modes sequentially. For example the smart antenna system is configurable for operating first in the omnidirectional mode, as described in the step S1, and then in a plurality of directional modes, as described in the step S2. The smart antenna system is further configurable to operate at least two modes in parallel, and to direct the received power corresponding to each mode towards a dedicated output. For example the smart antenna system is configurable to operate the omnidirectional mode twice in parallel, or to operate several different directional modes in parallel. The method further comprises an optional third step S3 of dynamically improving a signal quality of the digital signal receiver.

### Step S1: Determining a best location for positioning the digital signal receiver in the home

The idea is to use the power level of the RF channel received through the omnidirectional radiation mode of the antenna as an indicator of the average received signal strength of that channel at a given location within the home. To that end, in the sub-step S10, a Received Signal Strength (RSS) is measured from the antenna operated in the omnidirectional mode, for a set of channels at various indoor locations. Using the omnidirectional mode advantageously allows the reception of all the existing channels from all broadcast towers with equal antenna gain, making thus possible to fairly compare all the various locations without orientation discrimination. Unlike more sophisticated signal quality measurements such as SNR (Signal to Noise Ratio) or BER (Bit Error Rate), which take some time required for the demodulation of the channel, the level of the received RF power is advantageously deducible from the value of the AGC (Automatic Gain control) available at the tuner/demodulator interface. A high value of the AGC implies low signal power while a low value implies a high signal power at the tuner stage. Modern tuners provide high dynamic ranges (typically over 80dB) of the AGC with settling time of the AGC of few tens of milliseconds.

According to a specific and non-limiting embodiment a displayable user interface is used so as to assist a user in the installation step S1. The user for example triggers received signal strength measurements from the user interface of the digital signal receiver at each location among a set of candidate locations around the home. The displayable user interface provides a feedback to the user with regards to the measured values of received signal strength for the channels at the candidate locations. For example bar graphs are used to instantaneously display average power information of the set of channels at a candidate location. In a variant a threshold value is determined by the digital signal receiver and is used by the user interface to change the color of a bar graph, depending on whether the measured received signal strength is above the threshold value (i.e. display the bar in green) or below the threshold value (i.e. display the bar in red). The threshold value is for example determined to take into account the minimum required signal level at the antenna input for proper reception. In another example, the threshold value takes into account the fact that the omnidirectional mode input is followed by a power splitter for feeding two parallel tuner/demodulator chains. Also average improvement brought by the use of a directional mode of the antenna (i.e. antenna directional mode gain as well as multipath and interferences rejection gain), are taken into account for the estimation of this threshold value.

In an advantageous variant, the set of channels on which the received signal strength is measured by the digital signal receiver at various candidate locations, is a subset of the available channels and corresponds to a list a preferred channels. The list of preferred channels is for example determined from a list of preferred TV programs configured by a user from the user interface. Taking the United States as an example, a channel of 6 MHz includes between 1 and 6 programs with an average of 3 programs per channel. A channel comprising a preferred program as configured by the user is determined as a preferred channel. Optionally a priority order is also configured by the user for the preferred programs / channels via the user interface. There may be situations, where it is unlikely that an integrated small size antenna, even according to the disclosed principles could receive all the channels available with a good reception quality, for all homes, in a given location. Configuring a list of preferred TV programs with an optional priority order is advantageous as it allows displaying the measured received signal strength according to the priority as configured by the user, assisting the user in deciding what is the location fitting the greatest number of preferred channels / programs.

In the sub-step S12, a location is determined by the digital signal receiver, wherein an acceptable RSS value has been measured, at that location, for at least a subset of the channels. The subset of the channels is for example a list of preferred channels corresponding to a list of preferred TV programs. In a first variant, after having triggered a measurement of RSS values of a set of channels on the digital signal receiver positioned at different candidate locations, the user completes the installation process by positioning the digital signal receiver in the location for which an acceptable RSS value has been measured, for example thanks to the display of the bar graphs described above in any of the variants. In that variant the location is determined as the location at which, for example, the installation process is terminated from the user interface.

In a second variant, after various measurements of RSS values of a set of channels have been triggered on the digital signal receiver positioned at different candidate locations, the digital signal receiver automatically determines a location among the candidate locations based on the RSS values measured at the different candidate locations for at least a subset of the channels. The location, also called best location, is determined for example from a metric calculated from the RSS values measured for the channels at the different candidate locations. There is for example a RSS value for each channel measured at each candidate location. In addition a priority is associated with each channel. The priority is for example an integer, being 0, 1 or any value in an interval of values. Setting all the priorities to 1 represents considering all the available channels in the metric calculation. Setting the priority to 1 for some channels and to zero to other channels represents considering a set of preferred channels in the metric calculation. Setting the priority of the channels to a value greater than 1 for the preferred channels represents allocating a further prioritization among the preferred channels in the metric calculation. The metric for selecting the best channel is for example a weighted sum of the RSS values, wherein the weights are the priorities in any of their variants. In that example, the location corresponding to the highest metric is selected as the best location. In another example, the fact that a RSS value is above a threshold value is further taken into account. For example the location for which the greatest number of preferred channels have a measured RSS value above a threshold value is selected as the best location. Any combination of the previous examples and more generally any technique for automatically selecting a best location among candidate locations from RSS values measured at the different candidate locations for at least a subset of the channels is compatible with the disclosed principles. In that second variant, the selected location is for example suggested to the user and validated by the user via the user interface.

Considering the example of ATSC broadcast reception in the United States, a typical number of seventy five programs corresponds to typically twenty five RF channels. Considering an AGC setting time of thirty milliseconds, the refreshment period of scanning all the RF channels is equal for example to seven hundred fifty milliseconds leading to almost instantaneous assessment (at least in less than one second) of each location within the home. In an advantageous variant, a first RF receiver is used in parallel to a second RF receiver, each RF receiver comprising a RF tuner and a demodulator. This allows to divide by two the time needed for measuring a RSS for all the available channels, or for the preferred channels. More precisely, the first RF receiver measures the first RSS of a first subset of channels in parallel to the second RF receiver measuring a second RSS of a second subset of channels, the aggregation of the first and the second subsets of channels, corresponding to all the available channels, or all the preferred channels.

### Step S2: Fine tuning antenna configuration

Measuring a RSS using an omnidirectional antenna, while allowing a practical and quick identification of a good place for the localization of the digital signal receiver within the home, does not guarantee the best reception quality, in particular in presence of multipath and interferers. For example, an interfering signal or a multipath could improve the received signal power while it might degrade the reception quality. A directional radiation pattern, even moderate helps improving the desired signal level, reducing interferences and multipath, therefore leading to better overall performances, sometimes even with lower received power.

In the step S2, once the location of the digital signal receiver within the home is determined, a directional mode of the antenna is determined responsive to measuring a first signal quality of each channel of the set of channels at the determined location. In a variant, the set of channels is a subset of the available channels and correspond to a list of preferred channels as described above. More precisely, the first signal quality is measured by a first RF receiver for each channel and for each directional mode of the antenna. The first RF receiver comprises a tuner and a demodulator including AGC adjustment, Intermediate Frequency amplification, interferences rejection, multipath cancellation and Forward Error Correction, leading to an optimal SNR (Signal to Noise Ratio (SNR) and/or BER (Bit Error Rate).

In a first variant the first signal quality comprises a SNR. The directional mode of the antenna for a given channel is selected based on the SNR measured among the directional modes for that given channel. In a first example the directional mode of the antenna for a given channel is selected as the directional mode for which the highest SNR has been measured among the other directional modes for that given channel. In a second example the directional mode for a given channel is selected as a directional mode for which the SNR has been measured above a value for that channel.

In a second variant the first signal quality comprises a BER. The directional mode of the antenna for a given channel is selected based on the BER measured among the directional modes for that given channel. In a first example the directional mode of the antenna for a given channel is selected as the directional mode for which the lowest BER has been measured among the other directional modes for that given channel. In a second example the directional mode for a given channel is selected as a directional mode for which the BER has been measured below a value for that channel.

In yet another variant, any combination of the first and second variants is compatible with the disclosed principles. More generally, any technique for selecting a directional mode for a channel based on the measured SNR and/or BER values for other directional modes for that channel are compatible with the disclosed principles.

Advantageously the first signal quality, in any of its variant, is measured for a first channel by the first RF receiver in parallel of a second signal quality being measured by a second RF receiver for a second channel. Any variant for the second signal quality similar to the variants of first signal quality is compatible with the disclosed principles.

Measuring a SNR for a channel takes a few hundred of milliseconds (typically two hundred of milliseconds), while measuring a BER for a channel takes a few seconds (typically three seconds). Considering twenty five channels and eight directional modes, the duration time of the step S2 of the installation, using a single RF receiver is about:
- forty seconds, with a first signal quality based on a SNR only
- ten minutes, with a first signal quality level based on a BER only.

These durations are advantageously divided by two thanks to the use of the two RF receivers in parallel which finally leads to a typical duration for the installation of all the channels of about twenty seconds (respectively five minutes) when using SNR (respectively BER) as first (and second) signal quality.

### Step S3 (optional): Dynamic improvement of the received signal

Due to the well-known frequency selective multipath fading encountered in indoor environments, even after fine tuning the antenna configuration as described in step S2, the received signal may suffer from variations/fading due to time-varying multiple reflections from moving vehicles such as planes or cars or the movement of people/objects around the digital signal receiver. To that end an optional step S3 of antenna diversity advantageously leverages a second optional RF receiver in order to improve the stability of the reception of the first RF receiver.

In the sub-step S30, a TV program is received from the antenna and the first receiver, the antenna being set in a first directional mode corresponding to a channel of the TV program. Optionally the received TV program is further transmitted to another device of the home via a network interface.

In the sub-step S32, the antenna is sequentially set in other directional modes and a second signal quality of the channel is measured for each other directional mode by a second RF receiver, so as to identify another directional mode associated to a second signal quality of higher quality than the first signal quality for that TV program.

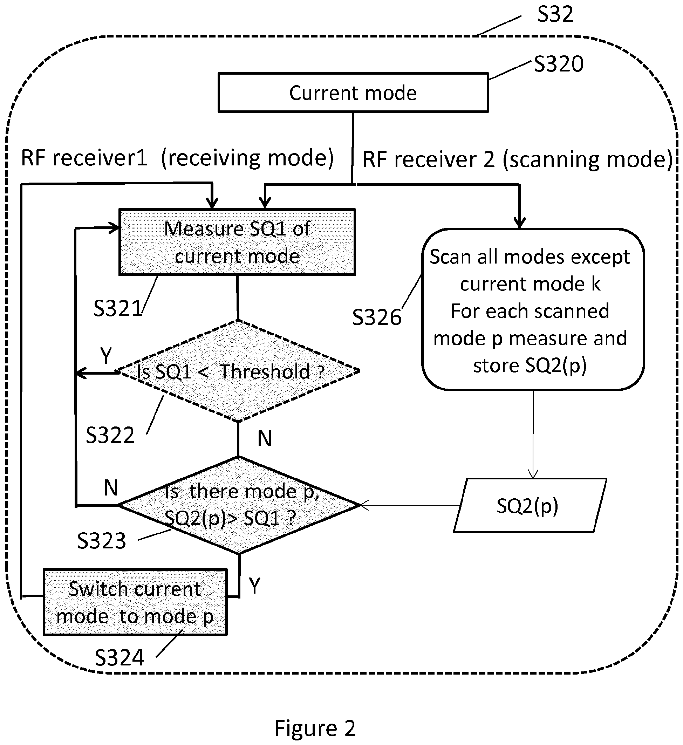

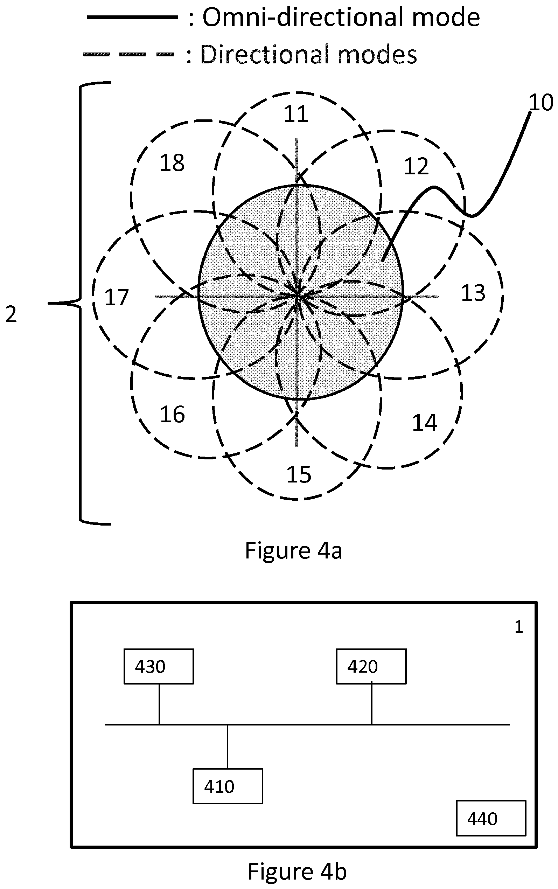

**Figure 2** describes the sub-step S32 of the method of Figure 1 with more details, according to a specific and non-limiting embodiment of the disclosed principles. In Figure 2, the first signal quality is denoted SQ1, the second signal quality is denoted SQ2, and directional modes are denoted by the letter p designating for example numbers, and corresponding to the selected directional beam 11, 12, 13, 14, 15, 16, 17, 18 for a given directional mode, as described later in Figure 4a. Any variant described in the disclosed principles for the first and second signal quality are applicable to SQ1 and SQ2

The sub-step S32 comprises two distinct loops operating simultaneously. The first loop S321, S322, S323, S324 also called receiving mode is based on the first RF receiver and is devoted to the decoding of the channel/program to be rendered to a user, the antenna 2 being set to a first directional mode, also denoted current mode in Figure 2. The first directional mode is for example the directional mode that was determined for that channel during the installation step S2 previously described. In another example, the first directional mode is the directional mode that was used the last time the same channel was received by the digital signal receiver. The second loop S326, also called scanning mode is based on the second RF receiver and is devoted to the scanning of all remaining directional modes, in order for the digital signal receiver to switch to the best one when required, the objective being to maintain the optimum reception quality.

As a change of program is requested by a user via a user interface, in the sub-step S320, the corresponding configuration, including the RF channel and the first directional mode (i.e. current mode) is retrieved. The antenna 2 and the first RF receiver are configured according to the current mode. The first signal quality metric SQ1 of the current mode is continuously tracked in the sub-step S321, and is denoted SQ1. In the sub-step S322, SQ1 is evaluated against a predetermined level denoted Threshold depending on the variant of signal quality (SNR, BER, any combination). Threshold is determined so as to preserve a good audio/video decoding even in case of a reasonable degradation of a reception quality. For the sake of clarity and without limitation Threshold represents a quality level, wherein the higher the Threshold, the higher the quality of the link. If the first signal quality SQ1 is of higher quality than the predetermined level, the current mode selected for program decoding is kept.

In parallel of the first loop, all directional modes except the current mode are scanned by the second RF receiver in the second loop S326. Scanning these directional modes comprises setting the antenna 2 in one of these directional modes, measuring a second signal quality of the channel for that that directional mode, storing in memory the measured second signal quality associated with that directional mode and repeating the process (set, measure, store) with another directional mode.

In the sub-step S323, when the first signal quality SQ1 is of lower quality than the predetermined level, the first signal quality SQ1 is further evaluated against the second signal quality SQ2(p) corresponding to other directional modes p, and measured by the second RF receiver. In case there is a directional mode p for which the second signal quality SQ2(p) is of higher quality than the first signal quality SQ1, the current mode is switched to the directional mode p for which the measured second signal quality SQ2(p) is of higher quality than the first signal quality SQ1. For example the current mode is switched to the directional mode corresponding to the highest signal quality. In case there is no directional mode p for which the second signal quality SQ2(p) is of higher quality than the first signal quality SQ1, the current mode is kept, and the first signal quality SQ1 is further measured in the sub-step S321.

Evaluating the first signal quality against a predetermined level in the sub-step S322 before evaluating the first signal quality against the second signal quality of other directional modes in the sub-step 323 is advantageous as it allows keeping the current mode is case the first signal quality is at least corresponding to the predetermined level, and to avoid frequent switching between directional modes. Indeed in case of frequent switching between different directional modes of similar performance, the risk of experiencing micro cut in the overall signal decoding significantly increases.

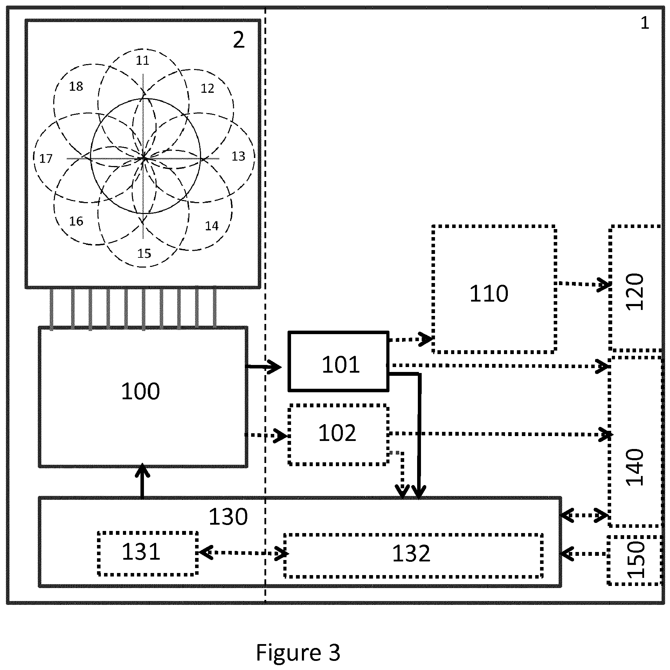

Figure 3 describes a processing device 1 as a digital signal receiver, according to a specific and non-limiting embodiment of the disclosed principles. The processing device 1 is for example a Digital Terrestrial Television receiver, but as mentioned above any kind of receiver adapted to receive wireless digital signals is compatible with the disclosed principles.

The processing device 1 comprises an antenna 2 operable in an omnidirectional mode and in a plurality of directional modes. More precisely, the antenna 2 comprises a reconfigurable radiating system, i.e. an antenna capable of modifying dynamically its radiation properties in a controlled and reversible manner. The antenna for example comprises inner mechanisms (such as RF switches, varactors, etc...) and/or tunable materials that enable controllable redistribution of the RF currents over the antenna surface and produce reversible modifications over its radiation patterns. For the sake of clarity and without loss of generality, these reversible modifications of the antenna radiation properties are further described as the omnidirectional mode and the plurality of directional modes. According to a specific and non-limiting embodiment illustrated in **Figure 4a****,** the omnidirectional mode corresponds to an omnidirectional radiation pattern 10, adapted to receive an equivalent power from all directions. According to the specific and non-limiting embodiment illustrated in **Figure 4a****,** the antenna 2 is further operable in eight different directional modes, each directional mode corresponding to a moderately directional beam 11, 12, 13, 14, 15, 16, 17, 18. Directional beams 11, 12, 13, 14, 15, 16, 17, 18 are determined in such a way that each directional beam 11, 12, 13, 14, 15, 16, 17, 18 corresponds to a different direction for receiving a greater amount of power, and that all directions are covered by a juxtaposition of all the directional beams 11, 12, 13, 14, 15, 16, 17, 18 as illustrated in **Figure 4a****.** The disclosed principles are described with eight different directional beams but any number of directional beams, corresponding to a same number of directional modes, is compatible with the disclosed principles. An antenna operable in an omnidirectional mode in addition to a plurality of directional modes is advantageous over an antenna operable only in a plurality of directional modes as it allows to fairly and quickly compare a set of various locations by evaluating the received power of a set of channels from all broadcast towers with an equal antenna gain at each location. The comparison is fair as the omnidirectional antenna allows measuring the received power without orientation discrimination. The comparison is fast as based on a RSS which can be measured in a very short period of time compared to other more sophisticated signal quality measurements.

The processing device 1 further comprises a selector 100 adapted to configure the antenna 2 in a mode among the omnidirectional mode and the plurality of directional modes. When the antenna 2 is configured in the omnidirectional mode, its radiating system is reconfigured so as to receive equivalent power from all directions via the omnidirectional radiation pattern 10. When the antenna 2 is configured in a directional mode, its radiating system receives greater power from a specific direction corresponding to a direction of the directional beam 11, 12, 13, 14, 15, 16, 17, 18. The selector 100 further comprises at least one switch, for example a single pole multiple throw (SPMT) switch, connected to the antenna 2. The switch is capable of switching at least one input connected to the antenna 2 to a first output. According to a specific and non-limiting embodiment, the switch comprises eight inputs, and one output, each input corresponding to a directional mode of the antenna 2. In a variant, one of the eight inputs also corresponds to the omnidirectional mode of the antenna. In another variant (not represented), the switch comprises at least one additional input corresponding to the omnidirectional mode. In any variant, the switch is configurable to switch any of the inputs corresponding to any of the antenna 2 modes to the first input. A combination of at least the antenna 2 and the selector 100 are an example of a smart antenna system.

The processing device 1 further comprises a first RF receiver 101 connected to the antenna 2 via the first output of the selector 100, the selector 100 being adapted to configure the antenna 2 in a first mode associated with the first RF receiver 101, the first mode being among the omnidirectional mode and the plurality of directional modes. The first RF receiver 101 comprises a first tuner and a first demodulator including AGC adjustment, Intermediate Frequency amplification, interferences rejection, multipath cancellation and Forward Error Correction, leading to an optimal SNR (Signal to Noise Ratio (SNR) and/or BER (Bit Error Rate).

Optionally, the processing device 1 further comprises a second RF receiver 102 connected to the antenna 2 via a second output of the selector 100, the selector 100 being further adapted to configure the antenna 2 in a second mode associated with the second RF receiver 102, in parallel of the first mode associated with the first RF receiver 101, the second mode being also among the omnidirectional mode and the plurality of directional modes. Similarly to the first RF receiver 101, the second RF receiver 102 comprises a second tuner and a second demodulator including AGC adjustment, Intermediate Frequency amplification, interferences rejection, multipath cancellation and Forward Error Correction, leading to an optimal SNR (Signal to Noise Ratio (SNR) and/or BER (Bit Error Rate).

In a first example both the first and second antenna modes are the omnidirectional mode. A configurable power splitter, included in either the selector 100 or in the antenna 2, is configured by the processing module 130 so as to split the power received from the omnidirectional radiation pattern 10 towards both the first and the second outputs of the selector 100. In a second example both the first and second antenna modes are a different directional mode, each mode respectively corresponding to a first and a second directional beam 11, 12, 13, 14, 15, 16, 17, 18. In that second example, the selector 100 is configured by the processing module 130 to direct the power received from the first directional beam to the first output and the power received from the second directional beam to the second output in parallel. In a third example, the first antenna mode is the omnidirectional mode and the second antenna mode is a directional mode corresponding to a directional beam 11, 12, 13, 14, 15, 16, 17, 18. In that third example, the selector 100 is configured by the processing module 130 to direct the power received from the omnidirectional radiation pattern 10 towards the first output in parallel of directing the power received from the directional beam to the second output. The third example is for example advantageous for further parallelizing the steps S1 and S2.

In an advantageous variant, a first RSS and/or a first signal quality is measured for a first channel by the first receiver in parallel of a second RSS and/or a second signal quality being measured by the second receiver for a second channel.

The processing device 1 further comprises a processing module 130, for example a processor, configured to set the antenna 2 in at least a mode among the omnidirectional mode and the plurality of directional modes. The antenna mode selection is done by the processing module 130 sending a control signal to the selector 100 further appropriately reconfiguring the antenna 2. The processing module 130 is configured to set the antenna 2 in the omnidirectional mode for measuring a first RSS for a set of channels at various indoor locations so as to determine a location. The processing module 130 is further configured to set the antenna 2 in a directional mode selected for each channel based on a first signal quality measured for each channel of the set of channels at the determined location. According to a specific and non-limiting embodiment the processing module 130 is further configured for measuring the first (and/or second) signal quality of each channel for each directional mode of the antenna.

According to a specific and non-limiting embodiment, the processing module 130 is further optionally configured to set the antenna 2 in the omnidirectional mode for measuring a second RSS for a second subset of channels at various indoor locations in parallel to measuring the first RSS for a first subset of channels at the various indoor locations, so as to determine a location. The processing module is further optionally configured to set the antenna 2 in a directional mode selected for each channel based on a first signal quality measured for each channel of a first subset of channels at the determined location, in parallel of a second signal quality measured for each channel of a second subset of channels at the determined location.

According to a specific and non-limiting embodiment the processing module 130 is further optionally configured for measuring the first (and/or second) signal quality of each channel for each directional mode of the antenna, the selected directional mode for a channel corresponding to the highest quality of the first and/or second quality factor being measured for the channel et for each directional mode.

According to a specific and non-limiting embodiment the processing module 130 is further optionally configured to configure the first RF receiver 101 to receive a TV program from the antenna, being configured in a first directional mode corresponding to a channel of the TV program. The processing module 130 is further configured to configure the second RF receiver 102 to sequentially configure the antenna in other directional modes and to measure the second signal quality of the channel of the TV program for each other directional mode. The processing module 130 is further configured to switch the antenna 2 from a first directional mode to a second directional mode and the associate the second directional mode of antenna 2 with the first RF receiver 101 for receiving the channel in case the second signal quality measured by the second receiver 102 for the channel as the second directional mode is configured, is of higher quality than the first signal quality being measured for the channel by the first RF receiver 101 as the first directional mode was configured.

According to a specific and non-limiting embodiment, the first RSS and/or the first signal quality, in any of its variant are permanently measured by the first RF receiver 101, and are accessible to the processing module 130 on request. For example, the level of the received signal strength is deducible from the value of the AGC (Automatic Gain control) available at the tuner and/or demodulator interface. According to another specific and non-limiting embodiment, the first received signal strength and/or the first signal quality in any of its variant are measured by the first RF receiver 101 based on a request sent by the processing module 130. Similarly measured second RSS and/or second signal quality are compatible with the disclosed principles.

The processing device 1 further comprises an optional input 150 to receive user data from a user. User data comprise trigger data generated from a user interface in order to trigger RSS measurements by the processing module 130, as the processing device 1 is located at various candidate locations. User data also comprise validation data generated from a user interface so that, for example, the processing module 130 determines the location for positioning the processing device 1. The input 150 belongs to a set comprising:
- a touch screen sensor and its accompanying controller based firmware able generate trigger data and validation data from a locally displayed user interface;
- A keyboard, a key pad or a set of keys able generate trigger data and validation data in relation with a user interface displayed on a local or remote display mean;
- Any other hardware adapted to enable a user to communicate user data to the processing module in relation to a user interface.

The processing device 1 further comprises an optional network interface 140 coupled in signal communication to the processing module 130, the first RF receiver 101 and the optional second receiver 102. The network interface 140 is for example configured to transmit a TV program received from and demodulated by the first 101 or the second 102 RF receiver to another network device over a network. The network interface 140 is also for example configured to receive user data from a remote device displaying a remote user interface to the user, and to send them to the processing module 130. According to different embodiments of the disclosed principles, the network interface 140 is a local area network interface and belongs to a set comprising:
- An Ethernet interface, or any network interface compatible with the IEEE 802 family of wired standards;
- A WiFi network interface in any of its variants, or more generally any networking standard compatible with the IEEE 802.11 family of standards;
- Bluetooth in any of its variants;
- MoCA;
- A power line interface in any of its variants.

More generally any networking interface allowing send and receive data to/from a home network is compatible with the disclosed principles.

The processing device 1 further comprises an optional audio video decoder 110 coupled in signal communication to the processing module 130 and the first RF receiver 101. The audio video decoder 110 receives TV programs from the first RF receiver 101. The audio video decoder 110 is further configured to decode the TV program and send the decoded data to an optional audio video output 120 such as an audio video rendering means. According to a particular embodiment the audio video rendering means is external to the device and the output 120 sends the decoded data to render to an external rendering means. According to different embodiments of the disclosed principles, the rendering means, internal or external, belongs to a set comprising:
- a personal computer;
- a TV;
- a tablet;
- a smartphone.
More generally any rendering means allowing to display a decoded audio video data is compatible with the disclosed principles.

According to a specific and non-limiting embodiment, the processing module 130 comprises a first processor 131 coupled in signal communication to a second processor 132. The first processor 131 is advantageously further connected to the selector 100 and the antenna, while the second processor 132 is further connected to the first receiver 101, and to the optional second receiver 102, input 150, network interface 140, decoder 101 and output 120. Two independent processors 131 and 132 allow to implement an antenna 2 separated from the processing device, i.e. not necessarily integrated in the digital signal receiver.

According to a specific and non-limiting embodiment, the antenna 2 is a frequency tunable antenna. In a first variant, the antenna 2 is frequency tunable between the UHF (Ultra High Frequency) band, typically 470-700MHz, and the VHF (Very High Frequency) band, typically 174-216MHz. In a second variant the antenna 2 is frequency tunable for each RF channel of both bands. A frequency tunable antenna advantageously improves the performances of a small size antenna in dedicated frequency bands. According to this specific and non-limiting embodiment, and in any of its variant, the processing module 130 is further configured to tune the frequency of the antenna, for operating in a RF channel, operating in a RF channel comprising any operation mentioned on the steps S1, S2 and S3 of the disclosed principles.

The disclosed principles are also applicable to devices directly connected to a display means or integrating a display means such as digital TVs. Indeed the disclosed principles allow to assist a user in the installation of the device by identifying a best location among candidate locations and by appropriately configuring the antenna in the best location.

**Figure 4b** represents an exemplary architecture of the processing device 1 according to a specific and non-limiting embodiment. The processing device 1 comprises one or more processor(s) 410, which is (are), for example, a CPU, a GPU and/or a DSP (English acronym of Digital Signal Processor), along with internal memory 420 (e.g. RAM, ROM, EPROM). The processing device 1 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 1.

According to an exemplary and non-limiting embodiment, the processing device 1 further comprises a computer program stored in the memory 420. The computer program comprises instructions which, when executed by the processing device 1, in particular by the processor 410, make the processing device 1 carry out the processing method described with reference to figure 1. According to a variant, the computer program is stored externally to the processing device 1 on a non-transitory digital data support, e.g. on an external storage medium such as a SD Card, HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limiting embodiments, the processing device 1 is a device, which belongs to a set comprising:
- a digital terrestrial TV receiver;
- a set top box device;
- a TV device;
- a digital media player device;
- an Internet gateway device;
- a communication device.

## Claims

1. A digital signal receiver, comprising:
- an antenna (2) operable in an omnidirectional mode and in a plurality of directional modes;
- a processor (130, 410) configured to:
∘ set the antenna (2) in the omnidirectional mode for measuring a first RSS (Received Signal Strength) for a set of channels at various locations;
∘ determine a location responsive to the first RSS measured at the location for the set of channels;
∘ set the antenna (2) in a directional mode selected for each channel based on a first signal quality measured for each channel of the set of channels at the determined location.

2. The receiver of claim 1, wherein the processor (130, 410) is further configured to measure the first signal quality of each channel for each directional mode of the antenna (2).

3. The receiver of any of claims 1 to 2, further comprising a first RF receiver (101) connected to the antenna (2) via a selector (100), the selector (100) being adapted to configure the antenna (2) in a first mode associated with the first RF receiver (101), the first mode being among the omnidirectional mode and the plurality of directional modes.

4. The receiver of claim 3, further comprising a second RF receiver (102) connected to the antenna (2) via the selector (100), the selector (100) being further adapted to configure the antenna (2) in a second mode associated with the second RF receiver (102), in parallel of the first mode associated with the first RF receiver (101), the second mode being among the omnidirectional mode and the plurality of directional modes.

5. The receiver of claim 4, wherein the first RSS is measured for a first channel by the first receiver (101) in parallel of a second RSS being measured by the second receiver (102) for a second channel.

6. The receiver of claim 4, wherein the first signal quality is measured for a first channel by the first receiver (101) in parallel of a second signal quality being measured by the second receiver (102) for a second channel.

7. The receiver of claim 4, wherein:
- the first RF receiver (101) is configured to receive a TV program from the antenna (2), being configured in a first directional mode corresponding to a channel of the TV program;
- the second RF receiver (102) is configured to sequentially configure the antenna (2) in other directional modes and to measure the second signal quality of the channel of the TV program for each other directional mode.

8. The receiver of claim 7, wherein the processor (130, 410) is further configured to set the antenna (2) in a second directional mode in case the second signal quality measured by the second RF receiver (102) as the second directional mode is set, is of higher quality than the first signal quality.

9. The receiver of any claims 1 to 8, wherein the first and the second signal quality comprise a signal to noise ratio value.

10. The receiver of any claims 1 to 8, wherein the first and the second signal quality comprise a bit error rate value.

11. The receiver of any claims 1 to 10, wherein the set of channels corresponds to a subset of available channels, and is configurable by a user.

12. An antenna (2) for digital signal indoor reception, the antenna (2) being operable in an omnidirectional mode and in a plurality of directional modes, the omnidirectional mode being used for measuring a received signal strength for a set of channels at various locations so as to determine a location, a directional mode of the antenna (2) being determined for each channel of the set of channels based on measuring a signal quality of each channel at the determined location.

13. A method for operating a digital signal receiver comprising an antenna (2) operable in an omnidirectional mode and in a plurality of directional modes, the method comprising:
- measuring (S10) a first RSS (Received Signal Strength) for a set of channels at various locations;
- determining (S12) a location responsive to the first RSS measured at the location for the set of channels;
- determining (S2) a directional mode of the antenna (2) at the determined location based on measuring a signal quality of each channel of the set of channels.

14. The method according to claim 13, further comprising:
- receiving (S30) a TV program from the antenna (2), being set in a first directional mode corresponding to a channel of the TV program,
- sequentially setting (S32) the antenna (2) in other directional modes and measuring a second signal quality of the channel for each other directional mode.

15. A computer program product for operating a digital signal receiver comprising an antenna (2) operable in an omnidirectional mode and in a plurality of directional modes, said computer program comprising program code instructions executable by at least one processor for:
- setting the antenna (2) in the omnidirectional mode for measuring a first RSS (Received Signal Strength) for a set of channels at various locations;
- determining a location responsive to the first RSS measured at the location for the set of channels;
- setting the antenna (2) in a directional mode selected for each channel based on a first signal quality measured for each channel of the set of channels at the determined location.
